# EUROPEAN PATENT APPLICATION

(11) **EP 4 807 332 A1**
(43) Date of publication of application: **16.09.2026**
(21) Application number: 26163702.9
(22) Date of filing: 10.03.2026
(51) Int. Cl.: G01L 9/00, G01L 19/00

(54) **PRESSURE SENSOR AND ELECTRICAL APPLIANCE**

(30) Priority: 14.03.2025 CN 202510312501
(71) Applicant: Illinois Tool Works Inc., Glenview IL 60025 (US)
(72) Inventor: LAI, Yong, Glenview, 60025 (US); BAI, Lijuan, Glenview, 60025 (US)
(74) Representative: HGF

(57) **Abstract**

The present disclosure discloses a pressure sensor and an electrical appliance. The pressure sensor includes a housing and a diaphragm. The housing has a housing chamber. The diaphragm is positioned within the housing chamber and includes: a support portion, a thin membrane portion, and an elastic compensation portion. The thin membrane portion surrounds the support portion and extends from a support portion edge of the support portion. The elastic compensation portion extends downward from the support portion and is supported by the housing. The elastic compensation portion is provided with a cavity therein. By providing the cavity inside the elastic compensation portion of the pressure sensor of the present disclosure, the downward protruding portion of the elastic compensation portion is less prone to bending deformation deviating from the vertical direction during deformation, thereby making the oscillating electrical signal more accurate.

## Description

### TECHNICAL FIELD

The present disclosure relates to a sensor and an electrical appliance, specifically a pressure sensor for detecting operating parameters of a household electrical appliance and an electrical appliance having the pressure sensor.

### BACKGROUND

Some household electrical appliances (e.g., washing machines) require sensing of certain operating parameters during use to ensure their proper operation, such as sensing the pressure of supplied water and/or the water level.

In the prior art, pressure sensors are typically used to sense water level and/or water pressure. A pressure sensor generally includes a rigid housing accommodating a deformable diaphragm sensitive to air pressure. The pressure sensor also includes a magnetic core and a coil. The magnetic core is operatively coupled to the diaphragm to move in response to the deformation of the diaphragm. The coil is connected to the housing. In response to the movement of the magnetic core, the coil forms a variable inductor. The coil and a capacitor form an oscillation circuit, so that in response to changes in the position of the magnetic core, the oscillation circuit can generate an oscillating electrical signal with a varying frequency. In use, the change in the oscillation frequency of the electrical signal can be caused by changes in the water level within the chamber of the household appliance.

In the prior art, the diaphragm includes a support body, a thin membrane portion, and an elastic compensation portion. The thin membrane portion extends from the edge of the support body, and the magnetic core is carried by the support body. The elastic compensation portion includes an elastic rod integrally formed with the support body, extending downward from the support body and supported by a lower housing.

### SUMMARY OF THE DISCLOSURE

Through in-depth research, the inventors of the present application have found that the prior art typically uses a solid elastic rod having an elongated shape. When subjected to force and deformed, this rod tends to bend laterally, which affects the linear movement of the diaphragm in response to pressure changes, thereby reducing the accuracy of the oscillating electrical signal. Additionally, the magnetic core is sleeved on a mounting rod made of softer material and integrally formed with the diaphragm, resulting in insufficient mounting stability of the magnetic core, which also affects the accuracy of the oscillating electrical signal.

To solve the above technical problems, according to a first aspect of the present disclosure, there is provided a pressure sensor including a housing and a diaphragm. The housing has a housing chamber. The diaphragm is positioned within the housing chamber. The diaphragm includes: a support portion, a thin membrane portion, and an elastic compensation portion. The thin membrane portion surrounds the support portion and extends from a support portion edge of the support portion. The elastic compensation portion extends downward from the support portion and is supported by the housing. The elastic compensation portion is provided with a cavity therein.

According to the first aspect of the present disclosure, in a direction in which the elastic compensation portion extends downward from the support portion, the cross-section of both the elastic compensation portion and the chamber gradually decrease.

According to the first aspect of the present disclosure, the elastic compensation portion has an inverted conical shape.

According to the first aspect of the present disclosure, the support portion, the thin membrane portion, and the elastic compensation portion of the diaphragm are integrally manufactured.

According to the first aspect of the present disclosure, the pressure sensor further includes a magnetic core configured to move with the movement of the diaphragm and a magnetic core seat assembled on the support portion to support the magnetic core.

According to the first aspect of the present disclosure, the magnetic core seat has a higher elastic modulus than the diaphragm .

According to the first aspect of the present disclosure, the diaphragm is selected from one or more of silicone rubber, natural rubber, nitrile rubber, ethylene propylene diene monomer rubber, thermoplastic polyurethane rubber, and synthetic rubber.

According to the first aspect of the present disclosure, the magnetic core seat is selected from one or more of polyoxymethylene, polybutylene terephthalate, polypropylene, polyethylene, and nylon.

According to the first aspect of the present disclosure, the support portion is provided with a magnetic core seat securing hole extending through the support portion from top to bottom for securing the magnetic core seat.

According to the first aspect of the present disclosure, the magnetic core seat securing hole is in connection with the cavity.

According to the first aspect of the present disclosure, the cavity is disposed below the magnetic core seat.

According to the first aspect of the present disclosure, the pressure sensor further includes a coil connected to the housing. The coil cooperates with the magnetic core to form a variable inductor.

According to the first aspect of the present disclosure, the housing includes an upper housing and a lower housing arranged to form the housing chamber between the upper housing and the lower housing. The diaphragm is positioned between the upper housing and the lower housing and divides the housing chamber into an upper chamber and a lower chamber. The elastic compensation portion extends downward from the support portion and is supported by the lower housing.

According to the first aspect of the present disclosure, the lower housing includes a connecting hole at a position where it supports the elastic compensation member. The connecting hole fluidly connects the lower chamber to the exterior of the pressure sensor, so that the air pressure in the lower chamber remains balanced with the pressure to be measured by the pressure sensor.

According to the first aspect of the present disclosure, the upper housing is provided with at least one or more air holes.

Specifically, the radius of the air holes is less than 0.3 cm. Preferably, the radius of the air holes is less than 0.1 cm.

According to the first aspect of the present disclosure, the diaphragm includes a sealing edge surrounding the thin membrane portion. The sealing edge is clamped between the upper housing and the lower housing to hermetically separate the lower chamber from the upper chamber. The thin membrane portion includes an arching portion spanning between the support portion edge and the sealing edge.

According to the first aspect of the present disclosure, the elastic compensation portion is clamped between the lower housing and the support portion.

According to the first aspect of the present disclosure, the pressure sensor further includes a cover disposed on the housing, forming an accommodating space between the cover and the housing.

According to the first aspect of the present disclosure, the pressure sensor further includes a circuit board, at least a part of which is installed in the accommodating space. Both ends of the coil are connected to the circuit board.

According to the first aspect of the present disclosure, the outer contour of the support portion has a support portion outer diameter, and the magnetic core has a magnetic core outer diameter. The support portion outer diameter is set to be equal to, slightly larger than, or slightly smaller than the magnetic core outer diameter; or the ratio of the support portion outer diameter to the magnetic core outer diameter is between 0.85 and 1.6.

According to the first aspect of the present disclosure, the magnetic core contacts the support portion.

According to a second aspect of the present disclosure, there is provided an electrical appliance including the pressure sensor according to the first aspect of the present disclosure.

According to some embodiments, the electrical appliance is a washing machine and/or a dishwasher.

The elastic compensation portion of the pressure sensor of the present disclosure is provided with a cavity therein, making the downwardly protruding portion of the elastic compensation portion less prone to bending deformation deviating from the vertical direction during the deformation process. The diaphragm material on the elastic compensation portion surrounds the cavity, making the cross-section of the elastic rod of the elastic compensation portion larger and stronger, less likely to undergo bending deformation deviating from the vertically extending direction, thereby not affecting the linear movement of the diaphragm with pressure changes and making the oscillating electrical signal more accurate. Moreover, the pressure sensor of the present disclosure is provided with a magnetic core seat assembled on the support portion for supporting the magnetic core. The magnetic core seat can be made of materials with better rigidity compared to the support portion, thereby ensuring the stability of the magnetic core seat's support for the magnetic core.

Furthermore, the outer diameter of the support portion of the pressure sensor of the present disclosure is comparable to the outer diameter of the magnetic core. Under the condition of the same diaphragm size, the thin membrane portion of the diaphragm can be made relatively large to maintain the sensitivity of the thin membrane portion's response to pressure changes. In other words, because the outer diameter of the support portion can be designed to be small, the structure of the diaphragm is more compact.

In practical applications, air holes can be provided on the upper housing to connect the upper chamber with atmospheric environment. In some cases, ants, small insects, etc., may enter the chamber through the air holes on the upper housing. When the size of the air holes is reduced, according to fluid dynamics principles, the air flow rate is inversely proportional to the cross-sectional area of the channel. The exhaust speed of the air holes will slow down. Due to the continuity of air flow, the slowed exhaust speed can cause air accumulation inside the chamber, thereby affecting the overall air flow balance within the chamber. In some cases, air hole blockage may occur. To solve this problem, starting from mechanical principles, the inventors considered adjusting the thickness and material of the diaphragm. The thickness of the diaphragm affects its elastic modulus and resistance when air flows past it, while the material affects the diaphragm's breathability and durability. By optimizing these parameters of the diaphragm, the resistance to air flow can be improved, thereby increasing exhaust efficiency and reducing the problem of air hole blockage.

Through the description of the present disclosure with reference to the accompanying drawings below, other purposes and advantages of the present disclosure will be apparent and can help to achieve a comprehensive understanding of the present disclosure.

### BRIEF DESCRIPTION OF THE DRAWINGS

FIG. 1A is a schematic perspective structural view of a pressure sensor according to the present disclosure.
FIG. 1B is a schematic perspective structural view of the pressure sensor shown in FIG. 1A with a cover hidden.
FIG. 2 is an exploded view of the pressure sensor shown in FIG. 1A.
FIG. 3A is a schematic perspective structural view of a diaphragm in FIG. 2.
FIG. 3B is a schematic perspective structural view of the diaphragm in FIG. 2 from another angle.
FIG. 3C is a front view of the diaphragm in FIG. 2.
FIG. 3D is a sectional view of the diaphragm in FIG. 3C along section line A-A.
FIG. 4A is a front view of the diaphragm, a magnetic core seat, and a magnetic core in FIG. 2 that are assembled together.
FIG. 4B is a sectional view of the diaphragm, the magnetic core seat, and the magnetic core assembled together along section line B-B in FIG. 4A.
FIG. 5A is a side view of the pressure sensor shown in FIG. 1A.
FIG. 5B is a sectional view of the pressure sensor as shown in FIG. 5A in a first state along section line C-C.
FIG. 5C is an enlarged view of a portion D of the pressure sensor shown in FIG. 5B.
FIG. 5D is a sectional view of the pressure sensor as shown in FIG. 5A in a second state along section line C-C.
FIG. 5E is an enlarged view of a portion E of the pressure sensor shown in FIG. 5D.

### Main Reference Signs

Pressure sensor 100; Cover 102; Housing 104; Connector pipe 105; Signal socket 106; Airplane head structure 108; Circuit board 110; Lower housing 111; Upper housing 112 Cylindrical end portion 113; Coil 114; Circuit board mounting seat 116; First pin 121; Second pin 122; Spring 202; Magnetic core seat 204; Magnetic core 206; Diaphragm 210; Support portion 302; Thin membrane portion 304; Elastic compensation portion 306; Cavity 308; Diaphragm material 309; Support portion edge 312; Magnetic core seat securing hole 314; Sealing edge 320; Arching portion 330; Spring mounting portion 402; Magnetic core upper abutment portion 404; Magnetic core mounting section 406; Magnetic core seat mounting portion 408; Magnetic core seat extension segment 409; Magnetic core seat head 410; Upper chamber 502; Lower chamber 504; Diaphragm abutment portion 508; Recessed structure 509; Accommodating space 510; Cylindrical end portion chamber 511; Connecting hole 520.

Before describing the embodiments of the present disclosure in detail, it should be understood that the present disclosure does not limit its application to the construction and arrangement details of components set forth in the following description or illustrated in the accompanying drawings. The present disclosure is capable of other embodiments and can be practiced or carried out in various ways. Moreover, it should be understood that the phraseology and terminology used herein are for descriptive purposes and should not be regarded as limiting. The use of "including," "comprising, " and variations thereof is intended to encompass the items listed thereafter and their equivalents, as well as additional items and their equivalents.

### DETAILED DESCRIPTION OF EMBODIMENTS

Various specific embodiments of the present disclosure will now be described with reference to the accompanying drawings, which form a part of this specification. It should be understood that although directional terms such as "front," "rear," "up," "down," "left," "right," etc., are used in the present disclosure to describe various example structural parts and elements, these terms are used herein only for convenience of explanation based on the example orientations shown in the drawings. Since the embodiments disclosed in the present disclosure can be arranged in different directions, these directional terms are for illustration only and should not be considered limiting. Where possible, the same or similar reference signs used in the present disclosure refer to the same or similar components.

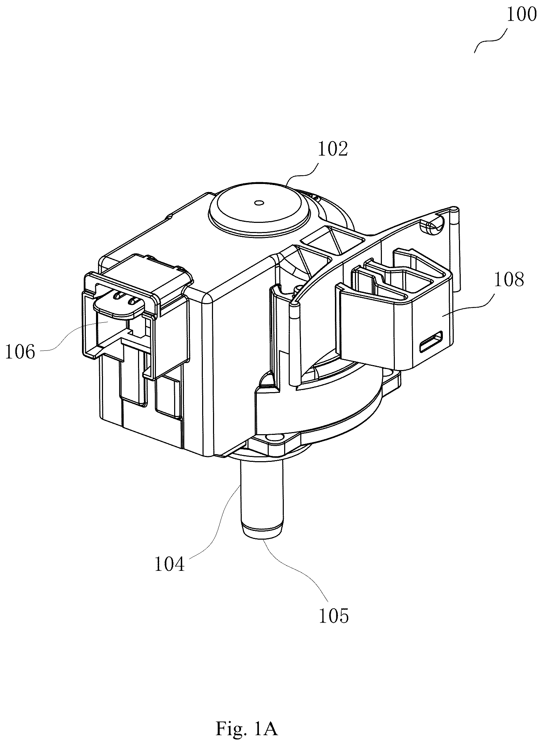

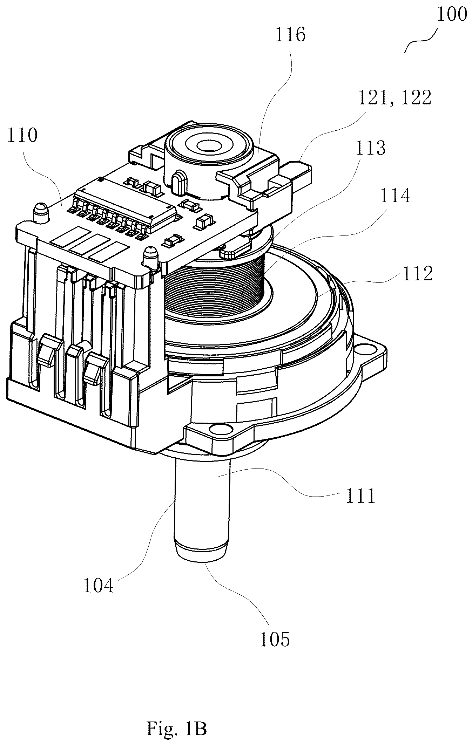

FIGS. 1A-1B show the perspective structural of the pressure sensor 100 of the present disclosure, where FIG. 1A is a schematic perspective structural view of the pressure sensor of the present disclosure, FIG. 1B is a schematic perspective structural view of the pressure sensor 100 shown in FIG. 1A with a cover 102 hidden to show more internal components of the pressure sensor 100.

As shown in FIG. 1A, the pressure sensor 100 includes a housing 104 and a cover 102 covering the housing 104. The cover 102 is provided with an airplane head structure 108 for mounting the pressure sensor 100 onto a household electrical appliance. The cover 102 is also provided with a signal socket 106 on a side wall thereof for transmitting signals generated by the pressure sensor 100 to a control system of the household electrical appliance. The housing 104 is provided with a connecting pipe 105 on the bottom thereof for fluidly connecting at least a part of the housing chamber of the housing 104 with an external fluid whose liquid level is to be sensed by the pressure sensor 100.

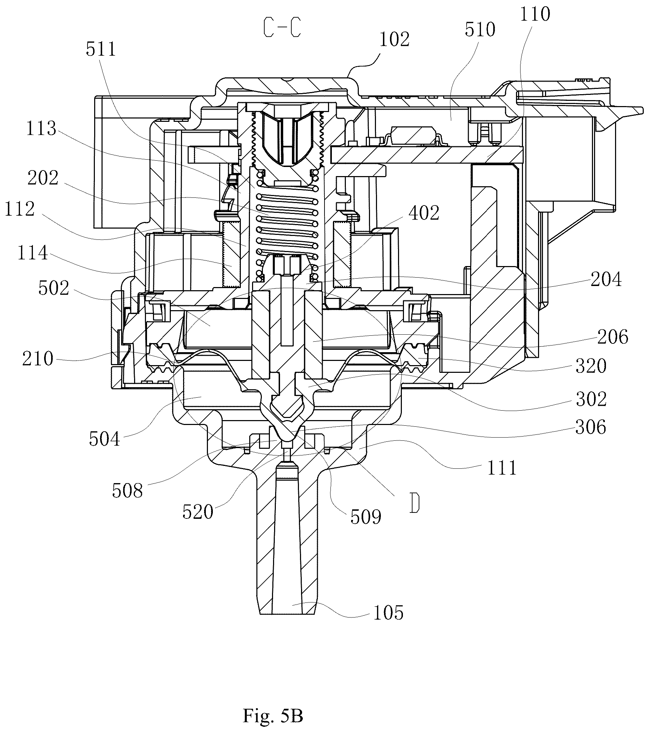

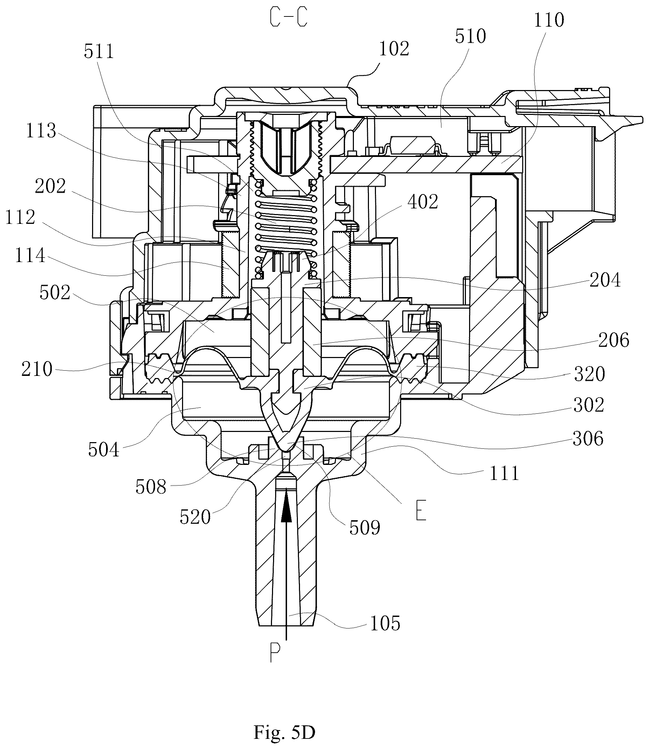

As shown in FIG. 1B, the housing 104 of the pressure sensor 100 includes an upper housing 112 and a lower housing 111 connected together. A housing chamber is formed between the upper housing 112 and the lower housing 111. A diaphragm 210 can be accommodated in the housing chamber (see FIGS. 5B and 5D for details). An upper part of the upper housing 112 is a cylindrical end portion 113. The cylindrical end portion 113 has a hollow structure with a cylindrical end portion chamber 511 (see FIGS. 5B and 5D for details). The pressure sensor 100 further includes a coil 114 and a magnetic core 206 accommodated in the housing chamber (see FIGS. 5B and 5D for details). The magnetic core 206 is made of ferromagnetic material, disposed in the housing chamber of the housing 104, and is movable relative to the housing 104 in response to deformation of the diaphragm 210. The coil 114 is mounted on the upper housing 112 and coaxially arranged with the magnetic core 206, so that when the magnetic core 206 moves relative to the housing 104, the magnetic core 206 can enter or exit the space defined by the coil 114. The magnetic core 206 and the coil 114 can form a variable inductor. The inductance of the coil 114 changes according to the amount the magnetic core 206 enters the space defined by the coil 114. According to one embodiment of the present disclosure, the coil 114 is wound around the outside of the cylindrical end portion 113 of the upper housing 112.

Continuing with FIG. 1B, the pressure sensor 100 further includes a circuit board 110 carried by the upper housing 112. At least a part of the circuit board 110 is accommodated in an accommodating space 510 formed by the cover 102 and the housing 104 (see FIGS. 5B and 5D for details). The cylindrical end portion 113 of the upper housing 112 is provided with a circuit board mounting seat 116. The circuit board 110 is mounted on the circuit board mounting seat 116. The circuit board mounting seat 116 is located above the coil 114 wound around the cylindrical end portion 113. The circuit board 110 is provided with a first pin 121 and a second pin 122. The first pin 121 and the second pin 122 are inserted into the circuit board mounting seat 116. Two ends of the coil 114 are respectively connected to the circuit board 110. Since the circuit board 110 is disposed outside the housing 104, the cover 102 needs to cover the housing 104 to seal the circuit board 110. A part of the circuit board 110 extends into the signal socket 106 on the cover 102. The signal socket 106 can connect the circuit board 110 to the control system of the household electrical appliance, allowing the control system to receive inductance change signals detected by the circuit board 110. The circuit structure and working principle of the circuit board are disclosed in paragraphs [0121]-[0124] of the specification of patent document CN108267257B.

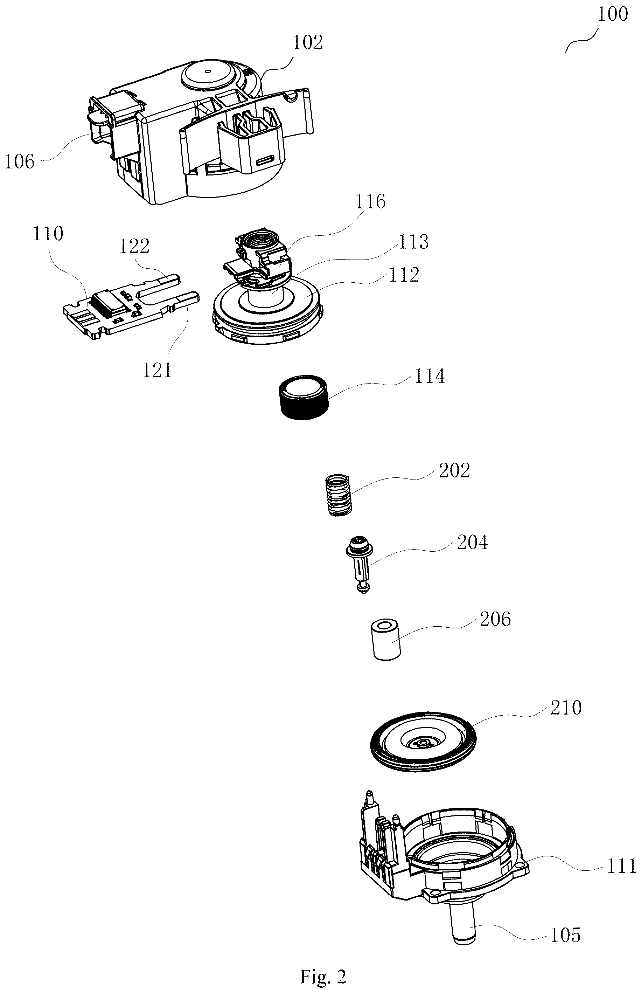

FIG. 2 is an exploded view of the pressure sensor shown in FIG. 1A, showing the components of the pressure sensor 100.

As shown in FIG. 2, the pressure sensor 100 includes the cover 102, the upper housing 112, the coil 114, a spring 202, a magnetic core seat 204, the magnetic core 206, the diaphragm 210, the lower housing 111, and the circuit board 110. The spring 202, the magnetic core seat 204, the magnetic core 206, and the diaphragm 210 are installed within the housing chamber formed by the upper housing 112 and the lower housing 111. The coil 114 and the circuit board 110 are installed on the upper housing 112 and accommodated in the accommodating space 510 (see FIGS. 5B and 5D for details) formed by the cover 102 and the housing 104. The diaphragm 210 can sense pressure changes (water level changes) of the fluid through the connector pipe 105 and deform accordingly. The magnetic core seat 204, the magnetic core 206, and the diaphragm 210 are secured together, so that the deformation of the diaphragm 210 can drive the magnetic core seat 204 and magnetic core 206 to move synchronously. According to the amount the magnetic core 206 enters the space defined by the coil 114, the inductance of the coil 114 changes, thereby generating a linearly varying frequency signal output to the circuit board 110, which indicates the pressure change.

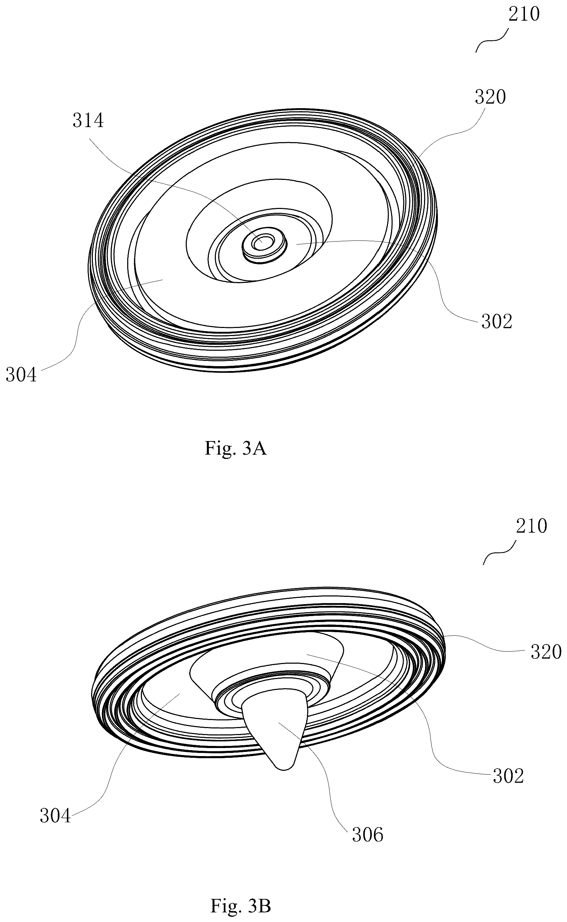

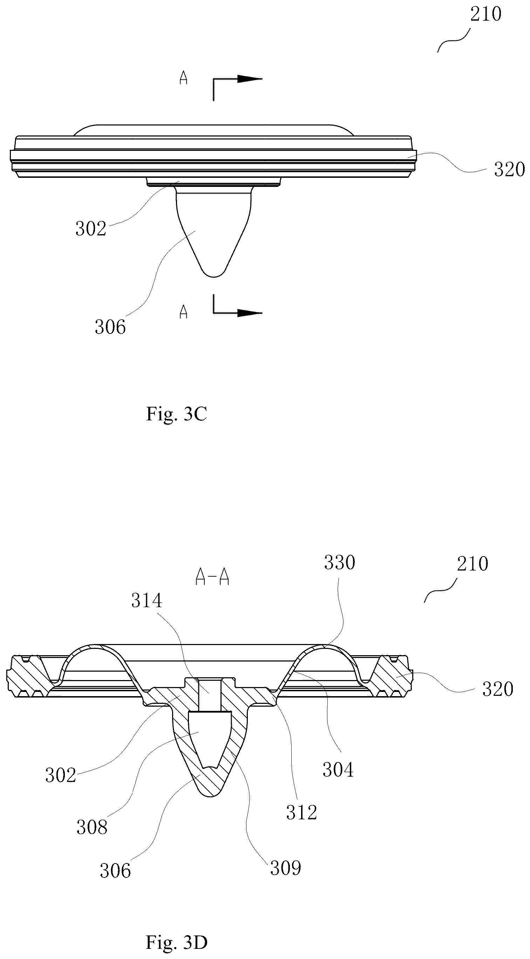

FIGS. 3A-3D show the specific structure of the diaphragm, where FIG. 3A is a schematic perspective structural view of the diaphragm in FIG. 2, FIG. 3B is a schematic perspective structural view of the diaphragm in FIG. 2 from another perspective, FIG. 3C is a front view of the diaphragm in FIG. 2, FIG. 3D is a sectional view of the diaphragm along section line A-A in FIG. 3C.

As shown in FIGS. 3A-3D, the diaphragm 210 includes a support portion 302 and a thin membrane portion 304 surrounding the support portion 302. The support portion 302 has a support portion edge 312. The thin membrane portion 304 extends from the support portion edge 312 of the support portion 302. The diaphragm 210 further includes a sealing edge 320 surrounding the thin membrane portion 304. The sealing edge 320 is clamped between the upper housing 112 and the lower housing 111 to divide the housing chamber into an upper chamber 502 and a lower chamber 504 (see FIGS. 5B and 5D for details), while the sealing edge 320 hermetically (or liquid-tightly) separates the upper chamber 502 and the lower chamber 504. The support portion 302 and the sealing edge 320 are at opposite sides of the thin membrane portion 304, and the thin membrane portion 304 arches upward to form an arching portion 330. According to one example of the present disclosure, the thin membrane portion 304 begins to arch from the connection position with the support portion edge 312 of the support portion 302 and the sealing edge 320 to form the arching portion 330. The arching portion 330 spans between the support portion edge 312 and the sealing edge 320.

Continuing with FIGS. 3A-3D, the diaphragm 210 further includes an elastic compensation portion 306, which extends downward from the support portion 302 and is supported by the bottom of the housing 104. In the downward extending direction, the cross-section of the elastic compensation portion 306 gradually decreases, so the elastic compensation portion 306 has a substantially inverted conical protruding structure. The elastic compensation portion 306 is provided with a cavity 308 therein. The shape of the cavity 308 is similar to the outer shape of the elastic compensation portion 306, so that the diaphragm material 309 of the elastic compensation portion 306 surrounds the cavity 308. Therefore, in the downward extending direction, the cross-section of the cavity 308 also gradually decreases along with the cross-section of the elastic compensation portion 306.

In the assembled state, the elastic compensation portion 306 is supported on the lower housing 111, so that the elastic compensation portion 306 is clamped between the lower housing 111 and the support portion 302. When subjected to pressure in the vertical direction, the diaphragm material 309 and the cavity 308 of the elastic compensation portion 306 will deform along the direction of the pressure. Due to the structural design where the diaphragm material 309 of the elastic compensation portion 306 surrounds the cavity 308, the elastic compensation component 306 is less prone to deformation deviating from the direction of the applied pressure during deformation. Moreover, because the cavity 308 structure is provided in the elastic compensation portion 306, the cross-section of the elastic compensation portion 306 perpendicular to the force direction is larger, enabling the elastic compensation portion 306 to provide better support. Since the deformation direction of the elastic compensation portion 306 is consistent with the pressure direction, the linear relationship between the deformation or displacement of the elastic compensation portion 306 and the pressure is better. Consequently, the movement of the support portion 302 of the diaphragm 210 and the magnetic core in response to pressure changes becomes more linear, resulting in a more accurate oscillating electrical signal.

Continuing with FIG. 3D, the support portion 302 is provided with a magnetic core seat securing hole 314 penetrating through the support portion 302 from top to bottom for securing the magnetic core seat 204. In the embodiment of the present disclosure, the magnetic core seat securing hole 314 is provided at the center of the support portion 302, and the magnetic core seat securing hole 314 is in connection with the cavity 308. In some other embodiments, the magnetic core seat securing hole 314 may also not be provided at the center of the support portion 302. In some other embodiments, the magnetic core seat securing hole 314 may also be recessed downward from the upper surface of the support portion 302 to a certain depth without penetrating through the support portion 302, so that the magnetic core seat securing hole 314 is not in connection with the cavity 308.

The support portion 302, the thin membrane portion 304, the elastic compensation portion 306, and the sealing edge 320 of the diaphragm 210 are integrally formed. In the embodiment of the present disclosure, the diaphragm 210 can be made of silicone rubber, natural rubber, nitrile rubber (NBR), ethylene propylene diene monomer rubber (EPDM), thermoplastic polyurethane rubber (TPU), synthetic rubber (TPE), or other elastic materials, with an elastic modulus lower than 0.1 GPa.

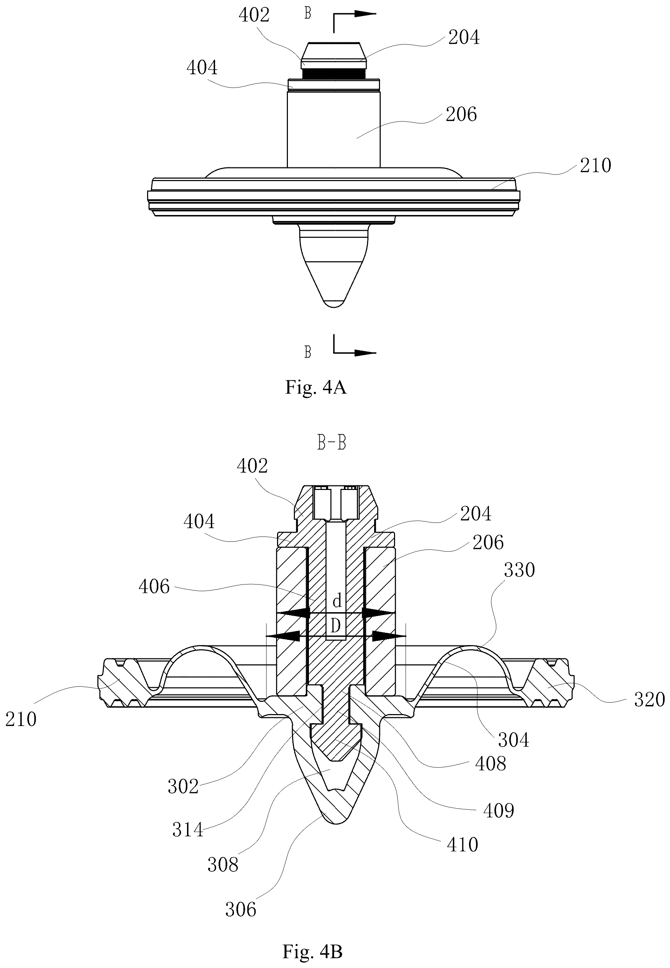

FIGS. 4A-4B show schematic diagram of the diaphragm, the magnetic core seat, and the magnetic core assembled together, where FIG. 4A is a front view of the diaphragm, the magnetic core seat, and the magnetic core in FIG. 2 that are assembled together, FIG. 4B is a sectional view of the diaphragm, the magnetic core seat, and the magnetic core assembled together along section line B-B in FIG. 4A.

As shown in FIGS. 4A-4B, the magnetic core seat 204 includes, from top to bottom, a spring mounting portion 402, a magnetic core upper abutment portion 404, a magnetic core mounting section 406, and a magnetic core seat mounting portion 408. The spring mounting portion 402 is used for mounting and supporting the spring 202. The magnetic core seat mounting portion 408 is used for stably installing the magnetic core seat 204 on the support portion 302. Specifically, the magnetic core seat mounting portion 408 extends downward from the magnetic core mounting section 406. At the extending end, it has an enlarged magnetic core seat head 410. The cross-section of the magnetic core seat head 410 is larger than the cross-section of the magnetic core seat extension segment 409 of the magnetic core seat mounting portion 408, so that the entire magnetic core seat mounting portion 408 has a barb structure. The outer diameter of the magnetic core seat head 410 is larger than the diameter of the magnetic core seat securing hole 314, and the diameter of the magnetic core seat securing hole 314 is not less than the outer diameter of the magnetic core seat extension segment 409. Since the diaphragm 210 is made of elastic rubber material, the magnetic core seat head 410 can pass through the magnetic core seat securing hole 314 via deformation of the support portion 302 of the diaphragm 210, thereby engaging on the lower side surface of the magnetic core seat securing hole 314, while the magnetic core seat extension segment 409 is accommodated in the magnetic core seat securing hole 314. The magnetic core upper abutment portion 404 is radially protruded relative to the magnetic core mounting section 406 for abutting the magnetic core 206. In the assembled state, the magnetic core mounting section 406 passes through the hollow area of the tubular magnetic core 206. The portion of the magnetic core upper abutment portion 404 protruding from the magnetic core mounting section 406 abuts the upper portion of the magnetic core 206. The tubular magnetic core 206 sleeves on the radial outside of the magnetic core mounting section 406, and the lower side of the magnetic core 206 contacts the support portion 302, so that the magnetic core 206 can be abutted between the magnetic core upper abutment portion 404 and the support portion 302, ensuring the magnetic core 206 is stably installed on the magnetic core seat 204. In the embodiment of the present disclosure, the cavity 308 of the elastic compensation portion 306 of the diaphragm 210 is below the magnetic core seat 204. In other words, the magnetic core seat 204 is above the cavity 308, or at least a part of the magnetic core seat 204 is positioned above the cavity 308.

Continuing with FIG. 4B, the support portion 302 is disk-shaped, and its outer contour has an outer diameter D. In the present disclosure, to reduce the size of the support portion 302, the outer diameter of the support portion 302 is comparable to the outer diameter of the magnetic core 206. That is, the outer diameter D of the support portion 302 is designed to be slightly larger than, equal to, or slightly smaller than the outer diameter d of the magnetic core 206, as long as it can carry the magnetic core 206. Therefore, when the outer diameter d of the magnetic core 206 is relatively small, the outer diameter D of the support portion 302 can be designed as small as possible. Thus, when the outer diameter of the diaphragm 210 is small or fixed, the support portion 302 has a smaller outer diameter, and the thin membrane portion 304 can be made relatively larger to maintain the sensitivity of the thin membrane portion 304 in response to pressure changes. According to one example of the present disclosure, the ratio of the outer diameter D of the support portion 302 to the outer diameter d of the magnetic core 206 is between 0.85 and 1.6.

In addition, the arching portion 330 of the thin membrane portion 304 spans between the support portion 302 and the sealing edge 320. The thickness of the main body of the support portion 302 is designed to be thicker than the thin membrane portion 304 because the support portion 302 needs certain strength to carry the magnetic core 206, while the thin membrane portion 304 needs certain flexibility or elasticity. Therefore, designing it thinner helps it change its shape under the action of changing pressure.

In the embodiment of the present disclosure, the magnetic core 206 is made of ferromagnetic material, and the magnetic core seat 204 is made of plastic. In some other embodiments, the magnetic core seat 204 can also be made of other materials with good rigidity, including but not limited to materials such as polyoxymethylene (POM), polybutylene terephthalate (PBT), polypropylene (PP), polyethylene (PE), and nylon (PA), with an elastic modulus above 1 GPa. Compared to the diaphragm 210, the material of the magnetic core seat 204 is more rigid, thereby ensuring more stable support of the magnetic core 206 by the magnetic core seat 204 and the support portion 302 of the diaphragm 210.

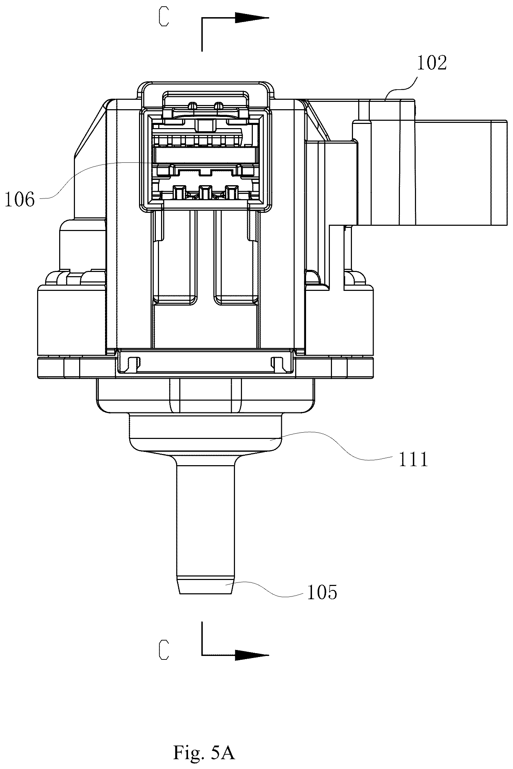

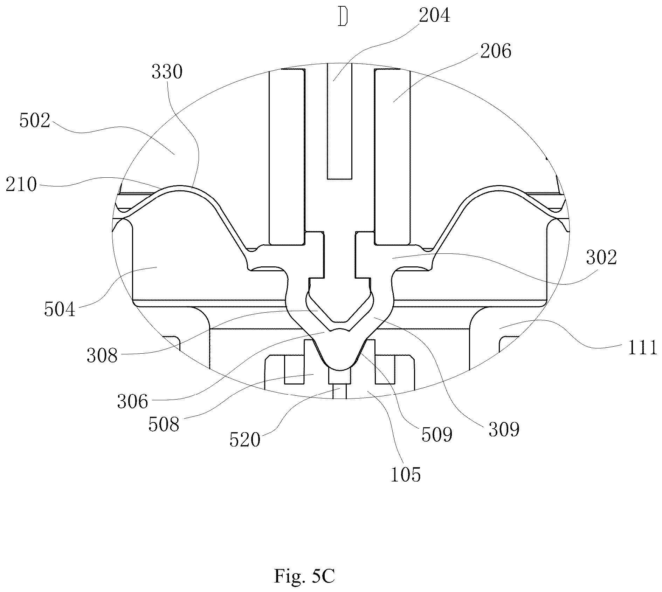

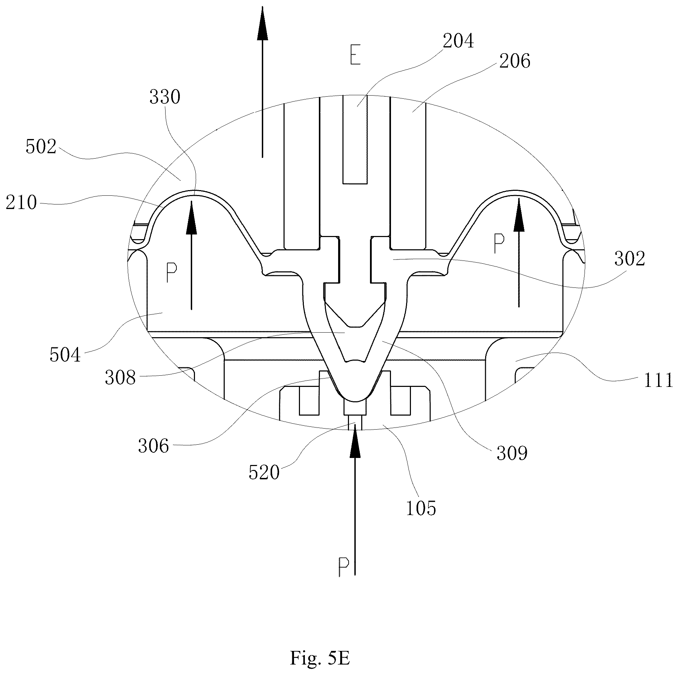

FIGS. 5A-5E illustrate the working process of the pressure sensor, where FIG. 5A is a side view of the pressure sensor shown in FIG. 1A, FIG. 5B is a sectional view of the pressure sensor of FIG. 5A along section line C-C in a first state, FIG. 5C is an enlarged view of a portion D of the pressure sensor shown in FIG. 5B, FIG. 5D is a sectional view of the pressure sensor of FIG. 5A along section line C-C in a second state, FIG. 5E is an enlarged view of a portion E of the pressure sensor shown in FIG. 5D. To more clearly show the deformation process of the diaphragm, irrelevant components and section lines of relevant components are omitted in the enlarged views of FIG. 5C and FIG. 5E.

As shown in FIGS. 5A-5C, the upper housing 112 is cup-shaped and includes the cylindrical end portion 113. The lower housing 111 is also cup-shaped. The cup openings of the cup-shaped upper housing 112 and lower housing 111 are hermetically (or liquid-tightly) joined together via the diaphragm 210. In the assembled state, the sealing edge 320 of the diaphragm 210 is clamped between the upper housing 112 and the lower housing 111, thereby dividing the housing chamber into an upper chamber 502 and a lower chamber 504. Also, the sealing edge 320 hermetically (or liquid-tightly) separates the upper chamber 502 and the lower chamber 504. The connecting pipe 105 is in fluid communication with the lower chamber 504. The upper chamber 502 is in connection with the atmospheric environment, so the air pressure in the upper chamber 502 is atmospheric pressure. The lower chamber 504 is connected via the connector pipe 105 at the bottom of the lower housing 111 to, for example, the tub of a household appliance to measure the liquid level (or water level) in the tub. The pressure in the lower chamber 504 depends on the height of the measured liquid level (or water level). In response to changes in air pressure in the lower chamber 504 of the pressure sensor 100, the diaphragm 210 can deform. Therefore, during use, as the height of the liquid level (or water level) changes, the pressure difference between the upper chamber 502 and the lower chamber 504 also changes, causing the diaphragm 210 to be subjected to the changing pressure difference between the upper chamber 502 and the lower chamber 504, so that the diaphragm 210 deforms with the change in pressure difference.

Continuing with FIGS. 5A-5C, the lower end of the spring 202 is installed on the spring mounting portion 402 of the magnetic core seat 204. The upper end of the spring 202 abuts the upper portion of the cylindrical end portion chamber 511 of the cylindrical end portion 113 of the upper housing 112. The lower housing 111 is provided with a diaphragm abutment portion 508 on the inner lower surface thereof. The side of the diaphragm abutment portion 508 facing the elastic compensation portion 306 is provided with a recessed structure 509, which can cooperate with the protruding part of the elastic compensation portion 306 to facilitate the elastic compensation portion 306 being supported on the diaphragm abutment portion 508. In the assembled state, the elastic compensation portion 306 is supported on the recessed structure 509 of the diaphragm abutment portion 508. Under the combined action of the gravity of the magnetic core seat 204, the magnetic core 206, and the diaphragm 210, the elastic compensation portion 306 will be compressed in the longitudinal direction, resulting in elastic deformation , and the internal space of the cavity 308 is compressed. At the initial position shown in FIGS. 5B-5C, the air pressures in the upper chamber 502 and lower chamber 504 are substantially equal. The protruding part of the elastic compensation portion 306 and the recessed structure 509 of the diaphragm abutment portion 508 are in non-sealing abutting contact. When water pressure changes, air in the connector pipe 105 can freely flow through the gap between the elastic compensation portion 306 and the recessed structure 509 of the diaphragm abutment portion 508, thereby applying changing pressure to the diaphragm 210. The diaphragm abutment portion 508 of the lower housing 111 is provided with a connecting hole 520 fluidly connected to the connector pipe 105. The connecting hole 520 is at the position where the lower housing 111 supports the elastic compensation portion 306 and fluidly connects the lower chamber 504 with the connector pipe 105, i.e., makes the lower chamber 504 fluidly communicate with the outside of the pressure sensor 100, so that the air pressure in the lower chamber 504 remains balanced with the water pressure to be measured by the pressure sensor 100.

As shown in FIGS. 5D-5E, as the liquid level rises, the water pressure increases accordingly, causing the air pressure P in the lower chamber 504 to gradually increase. Consequently, the upward pressure on the diaphragm 210 gradually increases, partially counterbalancing the gravity of the magnetic core seat 204, the magnetic core 206, and the diaphragm 210. The deformation amount of the elastic compensation portion 306 caused by gravitational compression decreases, and the compressed internal space of the cavity 308 gradually returns to its original size. This causes the elastic compensation portion 306, the support portion 302, and the arching portion 330 of the diaphragm 210 to move upward, thereby driving the magnetic core seat 204 and the magnetic core 206 to move upward synchronously. The upward movement of the magnetic core 206 causes the spring 202 to be compressed. As the liquid level decreases, the air pressure in the lower chamber 504 gradually decreases, and the spring 202 rebounds, returning the magnetic core 206 to its initial position.

The elastic compensation portion 306 is configured to counterbalance the gravity of the magnetic core seat 204, the magnetic core 206, and the diaphragm 210 through the deformation force generated by its elastic deformation. This ensures that even at the beginning of pressure change, the elastic compensation portion 306 can undergo elastic deformation or deformation recovery under changing pressure, allowing the diaphragm 210 to generate displacement in response to minor pressure changes. That is, the diaphragm 210 is capable of moving linearly in accordance with minor pressure changes, thereby generating a frequency signal that varies linearly. Therefore, the pressure sensor of the present disclosure is capable of sensing pressure changes with high precision via the movement of the diaphragm 210.

The present disclosure also protects an electrical appliance comprising the pressure sensor 100 as shown in FIG. 1A. The pressure sensor 100 is installed onto the electrical appliance via the airplane head structure 108 on the cover 102, thereby detecting changes in water level and/or water pressure within the chamber of the electrical appliance.

Although the present disclosure will be described with reference to the specific implementations shown in the accompanying drawings, it should be understood that there can be many variations of the pressure sensor of the present disclosure without departing from the spirit and scope of the teachings of the present disclosure. Components and/or structures in various embodiments of the present disclosure can be combined in various ways where possible, all of which fall within the protection scope of the present disclosure. Those of ordinary skill in the art will also recognize different ways to change the parameters in the embodiments disclosed in the present disclosure, all falling within the spirit and scope of the claims of the present disclosure.

## Claims

1. A pressure sensor comprising:
a housing (104) having a housing chamber; and
a diaphragm (210) positioned in the housing chamber, the diaphragm (210) comprising:
a support portion (302);
a thin membrane portion (304) surrounding the support portion (302) and extending from a support portion edge (312) of the support portion (302); and
an elastic compensation portion (306) extending downward from the support portion (302) and supported by the housing (104), the elastic compensation member (306) is provided with a cavity (308) therein.

2. The pressure sensor according to claim 1, wherein in a direction in which the elastic compensation portion (306) extends downward from the support portion (302), the cross-section of both the elastic compensation portion (306) and the cavity (308) gradually decrease.

3. The pressure sensor according to claim 2, wherein the elastic compensation portion (306) has an inverted conical shape.

4. The pressure sensor according to claim 1, wherein the support portion (302), the thin membrane portion (304), and the elastic compensation portion (306) of the diaphragm (210) are integrally formed.

5. The pressure sensor according to claim 1, further comprising:
a magnetic core (206) configured to move with the diaphragm (210); and
a magnetic core seat (204) assembled on the support portion (302) to support the magnetic core (206).

6. The pressure sensor according to claim 5, wherein the magnetic core seat (204) has a higher elastic modulus than the diaphragm (210).

7. The pressure sensor according to claim 5, wherein the support portion (302) is provided with a magnetic core seat securing hole (314) extending through the support portion (302) from top to bottom for securing the magnetic core seat (204).

8. The pressure sensor according to claim 5, further comprising a coil (114) connected to the housing (104), wherein the coil (114) cooperates with the magnetic core (206) to form a variable inductor.

9. The pressure sensor according to claim 1, wherein the housing comprises (104) an upper housing (112) and a lower housing (111) arranged to form the housing chamber between the upper housing (112) and the lower housing (111);
wherein the diaphragm (210) is positioned between the upper housing (112) and the lower housing (111) and divides the housing chamber into an upper chamber (502) and a lower chamber (504); and
wherein the elastic compensation portion (306) extends downward from the support portion (302) and is supported by the lower housing (111).

10. The pressure sensor according to claim 9, wherein the lower housing (111) includes a connecting hole (520) at a position where it supports the elastic compensation member (306), the connecting hole (520) fluidly connecting the lower chamber (504) to the exterior of the pressure sensor.

11. The pressure sensor according to claim 9, wherein the diaphragm (210) comprises a sealing edge (320) surrounding the thin membrane portion (304), the sealing edge (320) being clamped between the upper housing (112) and the lower housing (111) to hermetically separate the lower chamber (504) and the upper chamber (502); and
wherein the thin membrane portion (304) comprises an arching portion (330) spanning between the support portion edge (312) and the sealing edge (320).

12. The pressure sensor according to claim 9, wherein the upper housing (112) is provided with at least one or more air holes.

13. An electrical appliance, comprising the pressure sensor according toany one of claims 1 to 12.
